# EUROPÄISCHE PATENTANMELDUNG

(11) **EP 1 967 094 A2**
(43) Veröffentlichungstag der Anmeldung: **10.09.2008**
(21) Anmeldenummer: 08002991.1
(22) Anmeldetag: 19.02.2008
(51) Int. Cl.: A47B 88/04

(54) **Mitnehmerrolle für eine Ausziehführung für ausziehbare Möbelteile**

(30) Priorität: 09.03.2007 AT 3722007
(71) Anmelder: Fulterer Gesellschaft m.b.H., 6890 Lustenau (AT)
(72) Erfinder: Böhler, Stefan, 6890 Lustenau (AT)
(74) Vertreter: Hofmann, Ralf U.

(57) **Zusammenfassung**

Eine Mitnehmerrolle für eine Ausziehführung für ausziehbare Möbelteile, insbesondere für einen Synchronantrieb einer Mittelschiene (102) der Ausziehführung, umfasst erste und zweite Nabenteile (1, 2), die in Richtung der Achse (4) der Mitnehmerrolle gegeneinander verschiebbar sind und durch einen Mantel (3) verbunden sind, der in einem parallel zur Achse (4) der Mitnehmerrolle verlaufenden Querschnitt gesehen zumindest abschnittsweise gekrümmt zwischen dem ersten und zweiten Nabenteil (1, 2) verläuft und die Lauffläche (5) der Mitnehmerrolle bildet.

## Beschreibung

Die Erfindung bezieht sich auf eine Mitnehmerrolle für eine Ausziehführung für ausziehbare Möbelteile, insbesondere für einen Synchronantrieb einer Mittelschiene der Ausziehführung.

Bei Ausziehführungen nach der Teleskopbauart werden Mitnehmerrollen eingesetzt, um einen Synchronantrieb der Mittelschiene zu erreichen. Teleskopausziehführungen sind leichgängig und besitzen eine einfache Ausbildung, durch welche ein Vollauszug oder gegebenenfalls sogar Überauszug erreicht werden kann, d. h. bei voll ausgezogenem Möbelteil liegt die hintere Begrenzung des ausziehbaren Möbelteils in der Ebene bzw. vor der Stirnseite des Möbelkorpus. Ohne weitere Maßnahmen werden bei Teleskopauszügen die Auszieh- und die Mittelschiene nacheinander aus der Korpusschiene ausgezogen, wobei es am Ende des Ausziehweges der Ausziehschiene aus der Mittelschiene zu einem Anlaufen eines Anschlagelements der Ausziehschiene an einem Anschlagelement der Mittelschiene und einem hiermit verbundenen Stoß kommt, wodurch die Laufkultur beeinträchtigt wird. Zur Vermeidung dieses Nachteils sind u. a. Teleskopausziehführungen mit Mitnehmerrollen bekannt, bei denen durch die Mitnehmerrolle beim Ausziehen der Ausziehschiene eine synchrone (= gleichzeitige) Bewegung der Mittelschiene mit der halben Geschwindigkeit der Ausziehschiene erreicht wird, zumindest über einen Teil des Weges der Ausziehschiene. Solche Teleskopausziehführungen mit Differentialwirkung sind beispielsweise aus der AT 392 883 B und der EP 1 190 646 B1 bekannt.

Neben Rollen-Ausziehführungen nach der Teleskopbauart, bei denen die Laufrollen an den Schienen um ortsfest zu diesen liegenden Achsen drehbar gelagert sind, sind auch Ausziehführungen bekannt, die mit Kugeln oder Walzen bestückte Laufwagen aufweisen. Aus der EP 574 164 A2 ist eine Kugel-Teleskopausziehführung bekannt, bei der zum Synchronantrieb der Mittelschiene eine in einer Fensterausnehmung um eine vertikale Achse drehbar gelagerte elastische Mitnehmerrolle vorhanden ist, die an gegenüberliegenden Seitenflächen der Korpusschiene und der Ausziehschiene abrollt.

Ein Problem bei herkömmlichen Mitnehmerrollen ergibt sich daraus, dass von diesen aufgrund von Toleranzen sich ergebende unterschiedliche Abstände zwischen den Bauteilen aufgenommen werden müssen. Diese Mitnehmerrollen werden daher mit einer entsprechenden Elastizität ausgebildet. Allerdings kommt es bei einer Kompression einer herkömmlichen aus elastischem Material bestehenden Mitnehmerrolle zu einer entsprechenden Deformation, wodurch ihre Laufeigenschaften verschlechtert werden, und zwar umso mehr, je größer die Kompression ist. Ist andererseits der Andruckwiderstand der Mitnehmerrolle an ihre Laufbahnen zu gering, so wird der gewünschte Mitnahmeeffekt der Mittelschiene nicht erreicht.

Aufgabe der Erfindung ist es, eine Mitnehmerrolle der eingangs genannten Art bereitzustellen, die sich an unterschiedliche Abstände zwischen Laufbahnen, an denen sie beidseitig anliegt, anpassen kann, wobei die Mitnehmerrolle bei unterschiedlichen Abständen dieser Laufbahnen gute Laufeigenschaften aufweist. Erfindungsgemäß gelingt dies durch eine Mitnehmerrolle mit den Merkmalen des Anspruchs 1.

Die Mitnehmerrolle gemäß der Erfindung umfasst erste und zweite Nabenteile, die in Richtung der Achse der Mitnehmerrolle gegeneinander verschiebbar sind. Die Nabenteile sind von einem zwischen ihnen verlaufenden Mantel verbunden. Dieser Mantel ist in einem parallel zur Achse der Mitnehmerrolle verlaufenden Querschnitt gesehen zumindest abschnittsweise gekrümmt. Die äußere Oberfläche dieses Mantels bildet die Lauffläche der Mitnehmerrolle. Wird der Mantel der Mitnehmerrolle an gegenüberliegenden Stellen zusammengedrückt, so kommt es zu einer Vergrößerung des Abstandes zwischen den Nabenteilen, wobei sich der Durchmesser der Mitnehmerrolle verringert, die Mitnehmerrolle hierbei aber nicht bzw. nur wenig unrund wird. Nach Ende der Einwirkung der komprimierenden Kraft nimmt die Mitnehmerrolle aufgrund der Elastizität des Materials des Mantels wieder ihre ursprüngliche Form ein.

Vorzugsweise ist der Mantel mit in Umfangsrichtung der Lauffläche voneinander beabstandeten, quer zur Umfangsrichtung der Lauffläche verlaufenden Schlitzen versehen, die sich zumindest über den Bereich der Lauffläche erstrecken. Bei der Verringerung des Durchmessers der Rolle können sich die Breiten dieser Schlitze verringern. Die bei der Durchmesserverringerung der Mitnehmerrolle erforderliche Verformung des Mantels wird dadurch erleichtert.

In einer vorteilhaften Anwendung ist die Mitnehmerrolle gemäß der Erfindung Teil einer Ausziehführung nach der Teleskopbauart, wobei sie an der Mittelschiene drehbar gelagert ist und einerseits an einer Laufbahn der Ausziehschiene, andererseits an der Seitenwand des Möbelkorpus abrollt, an der die Ausziehführung montiert ist.

Weitere Vorteile und Einzelheiten der Erfindung werden im Folgenden anhand der beiliegenden Zeichnung erläutert. In dieser zeigen:
- Fig. 1: eine Schrägsicht eines Ausführungsbeispiels einer erfindungsgemäßen Mitnehmerrolle, im Zustand ohne auf die Rolle einwirkende äußere Kraft;
- Fig. 2: eine Ansicht auf die Mitnehmerrolle von Fig. 1;
- Fig. 3: einen Schnitt entlang der Linie A-A von Fig. 2;
- Fig. 4: einen Schnitt entlang der Linie B-B von Fig. 2;
- Fig. 5 bis Fig. 8 den Fig. 1 bis 4: entsprechende Darstellungen im komprimierten Zustand der Rolle;
- Fig. 9: ein Ausführungsbeispiel einer Ausziehführung mit einer erfindungsgemäßen Mitnehmerrolle im eingeschobenen Zustand der Ausziehführung, in Schrägsicht;
- Fig. 10: die Ausziehführung von Fig. 9 im ausgezogenen Zustand;
- Fig. 11, 12 und 13: Schrägsichten der Korpusschiene, Mittelschiene und Ausziehschiene;
- Fig. 14, 15 und 16: Schrägsichten der Korpusschiene, Mittelschiene und Ausziehschiene von der anderen Seite;
- Fig. 17: einen Querschnitt durch die an einem Möbel montierte Ausziehführung gemäß den Fig. 9 bis 16, mit der Schnittebene im Bereich der Mitnehmerrolle;
- Fig. 18: ein zweites Ausführungsbeispiel einer Ausziehführung mit einer Mitnehmerrolle gemäß der Erfindung im eingeschobenen Zustand der Ausziehführung, in Schrägsicht;
- Fig. 19: die Ausziehführung in Ansicht;
- Fig. 20: einen Schnitt entlang der Linie C-C von Fig. 19 und
- Fig. 21: einen Schnitt entlang der Linie D-D von Fig. 19.

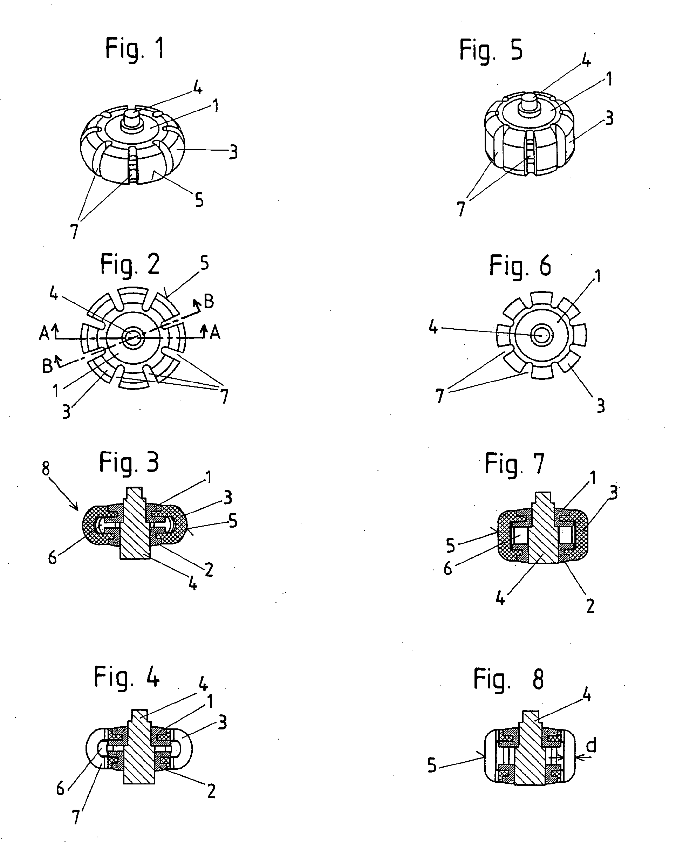

Ein Ausführungsbeispiel einer erfindungsgemäßen Mitnehmerrolle ist in den Fig. 1 bis 8 dargestellt. Die Mitnehmerrolle umfasst erste und zweite Nabenteile 1, 2, zwischen denen ein Mantel 3 verläuft. Die äußere Oberfläche des Mantels 3 bildet in ihrem von der Achse 4 der Mitnehmerrolle weggerichteten Bereich die Lauffläche 5 der Mitnehmerrolle.

Bei den ersten und zweiten Nabenteilen 1, 2 handelt es sich um separate Teile, die in Richtung der Achse 4 der Mitnehmerrolle gegeneinander verschiebbar sind. Hierbei ist im gezeigten Ausführungsbeispiel das erste Nabenteil 1 starr mit der Achse 4 verbunden und das zweite Nabenteil 2 ist in Längsrichtung auf dieser verschiebbar gelagert. Denkbar und möglich wäre auch eine (begrenzt) verschiebbare Lagerung beider Nabenteile 1, 2 auf der Achse 4 oder eine einstückige Ausbildung der Achse 4 und eines der beiden Nabenteile 1, 2, wobei das andere Nabenteil 1, 2 gegenüber der Achse 4 verschiebbar ist.

Der die beiden Nabenteile 1, 2 verbindende Mantel 3 ist lamellenartig ausgebildet Wandstärke d. Im gezeigten Ausführungsbeispiel ist die Wandstärke d. über die Ausdehnung des Mantels 3 konstant. In einem parallel zur Achse 4 verlaufenden Querschnitt durch die Mitnehmerrolle weist der Mantel 3 einen zumindest abschnittsweise gekrümmten Verlauf auf. Die Querschnittsform des Mantels 3 ist hierbei U-förmig, mit einer-je nach Kompressionszustand - mehr oder weniger weiten Öffnung und mehr oder weniger großen Tiefe. Innerhalb des Mantels liegt ein die Achse 4 umgebender Hohlraum 6.

Die beiden Ränder des Mantels 3 (= die beiden Enden des im Querschnitt gesehen U-förmigen Verlaufs) sind an den beiden Nabenteilen 1, 2 befestigt. Beispielswiese können hierbei die Nabenteile 1, 2 wie dargestellt umlaufende Nuten aufweisen, in welche die Ränder des Mantels 3 ragen und in denen sie geklemmt oder festgeklebt sind. Beispielsweise könnte auch eines oder beide Nabenteile 1, 2 zwei- oder mehrteilig ausgebildet sein, um die Ränder des Mantels 3 zwischen den Teilen aufzunehmen bzw. zu klemmen.

Der Mantel 3 ist im gezeigten Ausführungsbeispiel geschlitzt ausgebildet, wie dies bevorzugt ist. Eine Mehrzahl von in Umfangsrichtung der Lauffläche 5 voneinander beabstandeten Schlitzen 7 erstreckt sich quer zur Lauffläche 5 und erstreckt sich über diese. Günstigerweise verlaufen die Schlitze 7 seitlich der Lauffläche 5 weiter bis nahe zu den Nabenteilen 1, 2 oder bis zu diesen.

Der Mantel 3 besteht aus einem gummielastischen Material. Durch eine Ausbildung aus einem thermoplastischen Elastomer wird eine Ausbildung des Mantels 3 im Spritzgussverfahren ermöglicht.

Die Nabenteile 1, 2 bestehen vorzugsweise ebenfalls aus Kunststoff, der unelastisch oder mit einer geringeren Elastizität als der Mantel 3 ausgebildet ist. Die Achse 4 kann beispielsweise aus Metall oder ebenfalls aus einem Kunststoff bestehen.

Der Zustand der Mitnehmerrolle, wenn keine äußere Kraft auf diese einwirkt, ist in den Fig. 1 bis 4 dargestellt. Der Mantel 3 ist in diesem Zustand im Querschnitt parallel zur Achse 4 der Mitnehmerrolle gesehen vorzugsweise im Bereich der Lauffläche 5 bogenförmig gekrümmt ausgebildet. Denkbar und möglich wäre auch ein die Lauffläche bildender gerader Abschnitt mit beidseitig daran anschließenden gekrümmten Abschnitten.

Wenn auf den Mantel 3 an gegenüberliegenden Stellen eine in Richtung zur Achse 4 gerichtete Kraft einwirkt, so bewegen sich die Nabenteile 1, 2 auseinander und der äußere Durchmesser der Mitnehmerrolle verringert sich. Ein solcher komprimierter Zustand ist in den Fig. 5 bis 8 dargestellt. Die die Lauffläche 5 bildende äußere Oberfläche des Mantels 3 ist hierbei in Seitenansicht gesehen (Fig. 6) nach wie vor im Wesentlichen kreisförmig. Die Mitnehmerrolle weist somit auch im komprimierten Zustand sehr gute Laufeigenschaften auf.

Bei zunehmender Kompression der Mitnehmerrolle verringert sich die Krümmung des Mantels 3 im Bereich der Lauffläche 5 bzw. bildet oder vergrößert sich ein die Lauffläche 5 bildender zylindrischer Bereich, wie insbesondere aus Fig. 7 und 8 ersichtlich ist.

Anstelle einer über den Querschnittsverlauf gleichbleibenden Wandstärke d könnte sich die Wandstärke d des Mantels 3 über den Querschnittsverlauf auch ändern. Z. B. könnte die Wandstärke d in der Mitte größer und im an die Nabenteile 1, 2 anschließenden Randbereich kleiner sein. Durch eine Änderung der Wandstärke könnte der Spannungsverlauf im gummielastischen Material des Mantels 3 über den Querschnittsverlauf des Mantels 3 annähernd konstant gehalten werden.

In einer weiteren möglichen Ausführungsform könnten sich die Schlitze 7 auf einer Seite bis zum Rand des Mantels 3 erstrecken. Die Herstellung des Mantels 3 könnte dann im ebenen Zustand des Mantels 3 erfolgen und die U-förmige Biegung des Mantels 3 erst bei der Montage auf den Nabenteilen 1, 2 ausgebildet werden.

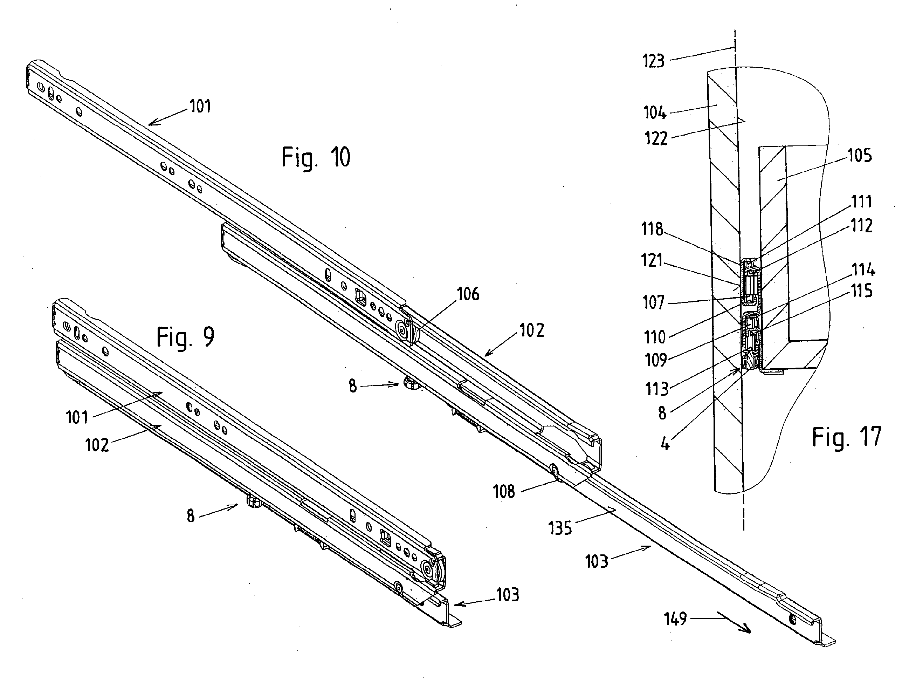

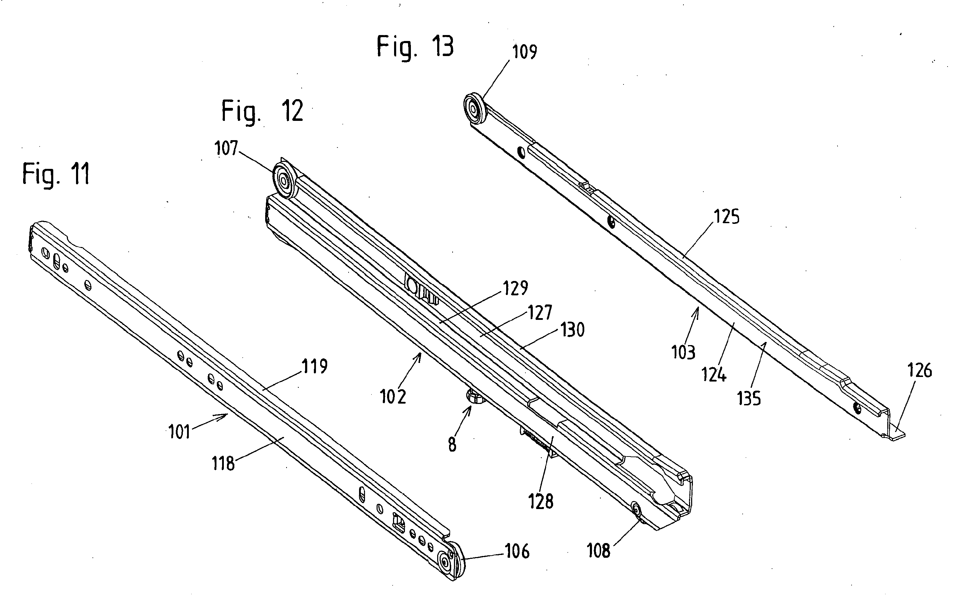

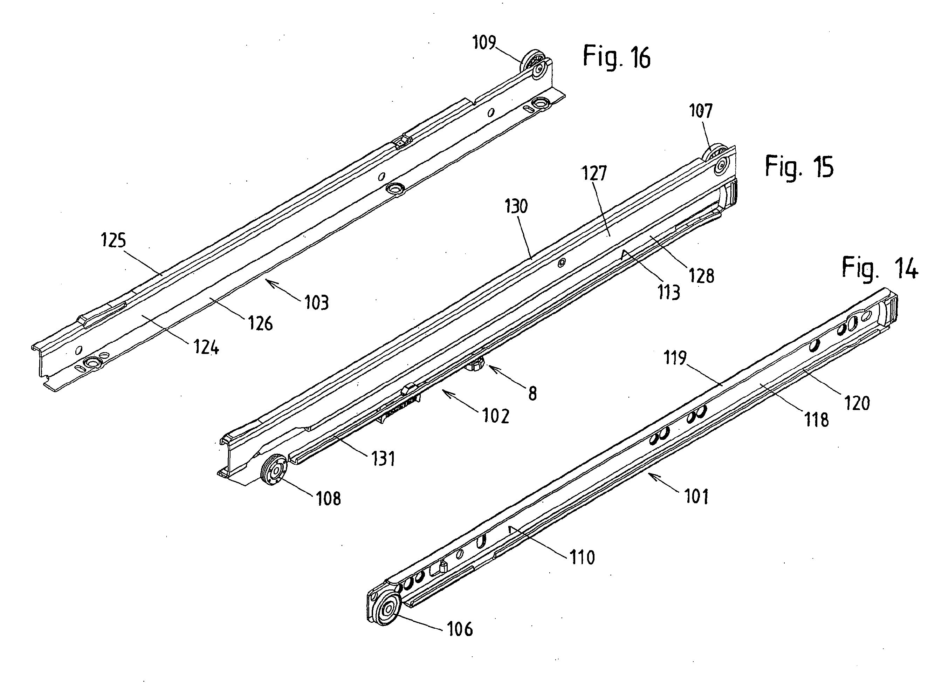

Ein Ausführungsbeispiel für eine Ausziehführung, die eine erfindungsgemäße Mitnehmerrolle 8 aufweist, ist in den Fig. 9 bis 17 dargestellt. Die Ausziehführung umfasst eine Korpusschiene 101, die an einem Möbelkorpus 104 zu montieren ist, eine Ausziehschiene 103, die an einem ausziehbaren Möbelteil 105, beispielsweise einer Schublade, zu montieren ist, und eine Mittelschiene 102. In Fig. 17 ist ein Ausschnitt eines Möbels mit der daran montierten Ausziehführung schematisch dargestellt, wobei nur eine der beiden von der Ausziehführung geführten Seiten des ausziehbaren Möbelteils 105 dargestellt ist. Die an der anderen Seite des ausziehbaren Möbelteils 105 montierten Schienen, die in den Figuren nicht dargestellt sind, sind spiegelbildlich zu den dargestellten Schienen 101, 102, 103 ausgebildet.

Die Schienen 101, 102, 103 sind mittels an den Schienen 101, 102, 103 um ortsfest zur jeweiligen Schiene 101, 102, 103 liegende Achsen drehbar gelagerte Laufrollen 106 - 109 gegeneinander verschiebbar. An jeder der Schienen 101, 102, 103 ist mindestens eine Laufrolle 106-109 um eine horizontale Achse drehbar gelagert, wie dies bei Teleskopausziehführungen üblich ist. Im gezeigten Ausführungsbeispiel sind alle Laufrollen 106 - 109, über welche die Schienen gegeneinander verschiebbar sind, um horizontale Achsen drehbar gelagert.

An der Korpusschiene 101 ist im vorderen Endabschnitt eine Laufrolle 106 drehbar gelagert, die mit einer nach unten gerichteten Laufbahn 112 der Mittelschiene 102 (vgl. Fig. 17) zusammenwirkt. An der Ausziehschiene 103 ist in ihrem hinteren Endabschnitt eine Laufrolle 109 drehbar gelagert, die mit einer nach oben gerichteten Laufbahn 113 der Mittelschiene 102 und mit einer nach unten gerichteten Laufbahn 114 der Mittelschiene 102 zusammenwirkt. An der Mittelschiene 102 ist in ihrem hinteren Endabschnitt eine Laufrolle 107 drehbar gelagert, die mit einer nach oben gerichteten Laufbahn 110 der Korpusschiene 101 und mit einer nach unten gerichteten Laufbahn 111 der Korpusschiene 101 zusammenwirkt. An der Mittelschiene 102 ist weiters im vorderen Endabschnitt eine Laufrolle 108 drehbar gelagert, die mit einer nach unten gerichteten Laufbahn 115 der Ausziehschiene 103 zusammenwirkt.

Die Korpusschiene weist einen U-förmigen Querschnitt mit einem Vertikalsteg 118 und oberen und unteren von diesem abstehenden Horizontalflanschen 119, 120 auf, an denen die Laufbahnen 110, 111 der Korpusschiene 101 angeordnet sind. Der Vertikalsteg 118, an dem die Laufrolle 106 drehbar gelagert ist, dient zur Befestigung am Möbelkorpus 104, wobei seine von der Mittelschiene 102 abgewandte Oberfläche eine Anlagefläche 121 zur Anlage an die Seitenwand 122 des Möbelkorpus 104 dient und hierbei in einer Anlageebene 123 liegt.

Die Ausziehschiene 103 weist einen Z-förmigen Querschnitt auf und umfasst einen Vertikalsteg 124, an dem die Laufrolle 109 drehbar gelagert ist, und einen von diesem abstehenden, mit einem umgebördelten Rand versehenen oberen Horizontalflansch 125, dessen nach unten gerichtete Oberfläche die Laufbahn 115 bildet. Vom Vertikalsteg 124 steht weiters ein unterer Horizontalflansch 126 in die entgegengesetzte Richtung wie der obere Horizontalflansch 125 ab. Dieser dient zur Auflage des ausziehbaren Möbelteils 105. Der untere Horizontalflansch 126 könnte auch entfallen und die Befestigung am ausziehbaren Möbelteil 105 könnte nur am Vertikalsteg 124 erfolgen. Die Querschnittsform wäre dann L-förmig.

Die Mittelschiene 102 weist einen S-förmigen Querschnitt auf und umfasst zwei zueinander horizontal versetzte Vertikalstege 127, 128, die über einen mittleren Horizontalflansch 129 miteinander verbunden sind. An der nach unten gerichteten Oberfläche des mittleren Horizontalflansches 129 ist die Laufbahn 114 angeordnet. Am oberen Ende des oberen Vertikalstegs 127 an dem die Laufrolle 107 der Mittelschiene 102 drehbar gelagert ist, steht von diesem ein oberhalb des mittleren Horizontalflansches 129 liegender oberer Horizontalflansch 130 ab, an dessen nach unten gerichteter Oberfläche die Laufbahn 112 angeordnet ist. Am unteren Ende des unteren Vertikalstegs 128, an dem die Laufrolle 108 drehbar gelagert ist, steht ein unterhalb des mittleren Horizontalflansches 129 angeordneter unterer Horizontalflansch 131 ab, an dessen nach oben gerichteter Oberfläche die Laufbahn 113 angeordnet ist.

An der Unterseite des unteren Horizontalflansches 131 der Mittelschiene 102 ist die Mitnehmerrolle 8 angeordnet. Die Achse 4 wird von einem am unteren Horizontalflansch 131 angebrachten, vertikal ausgerichteten Achsbolzen gebildet. Die Mitnehmerrolle 8 befindet sich in einem mittleren Abschnitt der Längserstreckung der Mittelschiene 102.

Wenn die Schienen 101, 102, 103 in einer der Einbaulage entsprechenden Ausrichtung angeordnet sind, aber keine äußere Kraft auf die Ausziehführung einwirkt, ist die Mitnehmerrolle 8 einerseits an eine der Anlageebene 123 zugewandte Laufbahn 135 der Ausziehschiene 103 angedrückt und kann an dieser abrollen, steht andererseits über die Anlageebene 123 der Korpusschiene 1 vor (vgl. Fig. 17). Die Anlageebene 123 schneidet also die Mitnehmerrolle 8. Dadurch kommt sie im eingebauten Zustand in Anlage mit der Seitenwand 122 des Möbelkorpus 104, so dass sie zwischen der Seitenwand 122 des Möbelkorpus 104 und der Ausziehschiene 103 abrollt. Durch die elastische Komprimierbarkeit der Mitnehmerrolle 8 wird eine ausreichende Anpresskraft und somit Reibung zwischen der Mitnehmerrolle 8 und der Ausziehschiene 103 bzw. dem Möbelkorpus 104 hervorzurufen, so dass ein Abrollen der Mitnehmerrolle 8 erreicht wird. Weiters ist die Komprimierbarkeit zur Aufnahme von Toleranzen, insbesondere in den Abmessungen des ausziehbaren Möbelteils 105 und des Möbelkorpus 104 erforderlich. Zur Aufnahme solcher Toleranzen können weiters die Schienen 101, 102, 103 in lateraler Richtung etwas gegeneinander verschoben werden (in eine horizontale, rechtwinklig zur Ausziehrichtung 149 liegende Richtung).

Die Laufbahn 135 der Ausziehschiene 103 wird von einer in Richtung zur Anlageebene 123 weisenden Seitenfläche des Vertikalstegs 124 gebildet.

Durch das Abrollen der Mitnehmerrolle 8 zwischen der Ausziehschiene 103 und dem Möbelkorpus 104 wird die Mittelschiene 102 beim Ausziehen der Ausziehschiene 103 in die Ausziehrichtung 149 bzw. beim Einschieben entgegen der Ausziehrichtung 149 mit der halben Geschwindigkeit der Ausziehschiene 103, also um die jeweilige halbe Wegstrecke der Ausziehschiene 103 mitgenommen, d.h. ein Differentialantrieb (= Synchronantrieb) für die Mittelschiene wird ausgebildet. Nur im Bereich des Vollauszuges bzw. Überauszuges des ausziehbaren Möbelteils 105, wenn die Mitnehmerrolle 8 den Bereich der Mitnehmer-Laufbahn 135 verlässt oder außer Eingriff der Seitenwand 122 des Möbelkorpus 104 gelangt, wird dieser Differentialantrieb der Mittelschiene beendet.

Unterschiedliche Modifikationen dieser Ausziehführung sind denkbar und möglich. So könnte beispielsweise die Achse 4 der Mitnehmerrolle 8 auch in einem Winkelbereich von 45° gegenüber der Vertikalen geneigt sein.

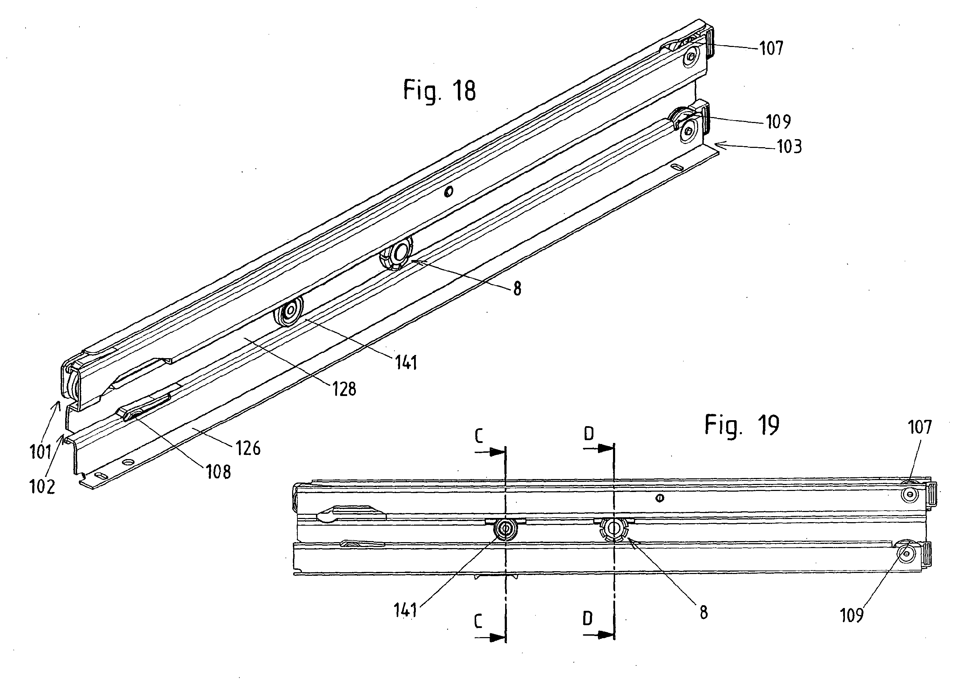

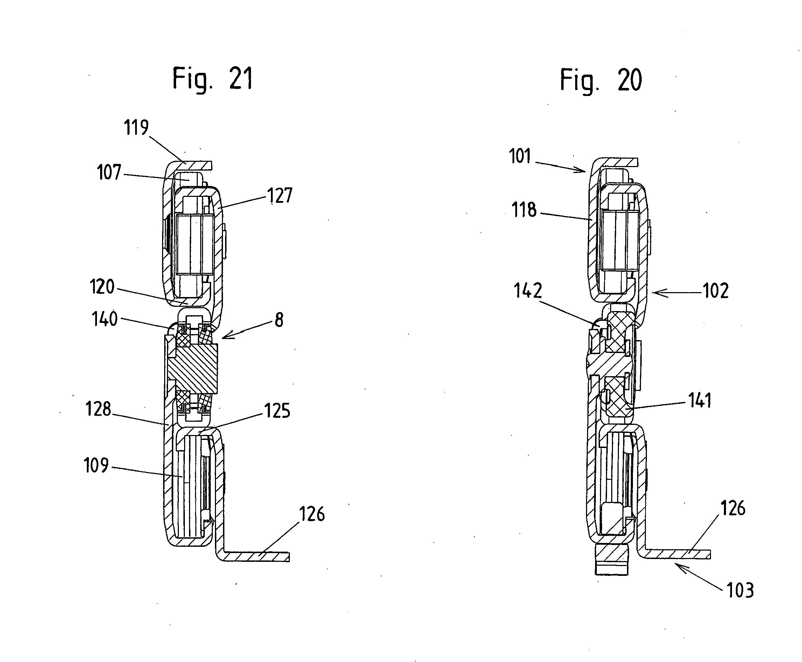

Eine weitere Ausführungsform einer Ausziehführung mit einer erfindungsgemäßen Mitnehmerrolle 8 ist in den Fig. 18 bis 20 dargestellt. Abgesehen von der Ausbildung der Mitnehmerrolle 8 ist diese Ausziehführung in bekannter Weise entsprechend der aus der in der Beschreibungseinleitung genannten EP 1 190 646 B1 bekannten Ausziehführung ausgebildet. Die Ausziehführung ist wiederum in Differentialbauweise ausgeführt. Zu den entsprechenden Teilen der anhand Fig. 9 bis 17 beschriebenen Ausziehführung analoge Teile sind mit den gleichen Bezugszeichen versehen. Die Korpusschiene 101 und die Ausziehschiene 103 sind im Wesentlichen gleich wie im zuvor beschriebenen Ausführungsbeispiel ausgebildet. Die Mittelschiene 102 unterscheidet sich vom zuvor beschriebenen Ausführungsbeispiel durch die höhere Ausbildung ihres unteren Vertikalstegs 128. Die Mitnehmerrolle 8 ist nunmehr an diesem unteren Vertikalsteg 128 drehbar gelagert und durchsetzt eine Fensteröffnung 140 im mittleren Horizontalflansch 129. Die Mitnehmerrolle 8 rollt einerseits an der Oberseite des oberen Horizontalflanschs 125 der Ausziehschiene 103, andererseits an der Unterseite des unteren Horizontalflanschs 120 der Korpusschiene 101 ab. Beim Ausziehen der Ausziehschiene 103 aus der Korpusschiene 101 wird somit die Mittelschiene 102 synchron (= gleichzeitig) mitgenommen.

Weiters ist im bezogen auf die Längsausdehnung der Mittelschiene 102 zwischen der vorderen Rolle 108 der Mittelschiene 102 und der Mitnehmerrolle 8 liegenden Bereich der Mittelschiene 102 am unteren Vertikalsteg 128 der Mittelschiene 102 eine Rolle 141 drehbar gelagert, die hier eine Fensteröffnung 142 durchsetzt. Diese Rolle 141 ist oberhalb des oberen Horizontalflansches 125 der in die Mittelschiene 102 ordnungsgemäß eingesetzten Ausziehschiene 103 angeordnet und dient zur Abstützung des oberen Horizontalflansches 125 der Ausziehschiene 103, wenn beim Ausziehen der Ausziehführung ein Lastwechsel auftritt und die Ausziehschiene 103 in ihrem rückwärtigen Bereich nach oben gedrückt wird (wobei die Schwenkachse durch den auf der Rolle 8 aufliegenden Bereich des oberen Horizontalflansches 125 der Ausziehschiene 103 verläuft).

Wenn beim Ausziehen der Ausziehführung die Mitnehmerrolle 108 das hintere Ende des oberen Horizontalflanschs 125 der Ausziehschiene 103 erreicht, kann ein weiteres Ausziehen der Ausziehschiene 103 ermöglicht sein, um einen Überauszug zu realisieren. In diesem Abschnitt der Ausziehbewegung findet kein Synchronantrieb der Mittelschiene 102 statt.

Eine erfindungsgemäße Mitnehmerrolle kann in verschiedensten andern Ausführungen von Ausziehführungen eingesetzt werden. Beispielsweise auch in Kugelausziehführungen, wie sie beispielsweise aus dem in der Beschreibungseinleitung genannten Stand der Technik bekannt sind.

### Legende

### zu den Hinweisziffern:

- 1: erstes Nabenteil
- 2: zweites Nabenteil
- 3: Mantel
- 4: Achse
- 5: Lauffläche
- 6: Hohlraum
- 7: Schlitz
- 8: Mitnehmerrolle
- 101: Korpusschiene
- 102: Mittelschiene
- 103: Ausziehschiene
- 104: Möbelkorpus
- 105: ausziehbares Möbelteil
- 106: Laufrolle
- 107: Laufrolle
- 108: Laufrolle
- 109: Laufrolle
- 110: Laufbahn
- 111: Laufbahn
- 112: Laufbahn
- 113: Laufbahn

- 114: Laufbahn
- 115: Laufbahn
- 118: Vertikalsteg
- 119: Horizontalflansch
- 120: Horizontalflansch
- 121: Anlagefläche
- 122: Seitenwand
- 123: Anlageebene
- 124: Vertikalsteg
- 125: oberer Horizontalflansch
- 126: unterer Horizontalflansch
- 127: oberer Vertikalsteg
- 128: unterer Vertikalsteg
- 129: mittlerer Horizontalsteg
- 130: oberer Horizontalflansch
- 135: Laufbahn
- 140: Fensteröffnung
- 141: Rolle
- 142: Fensteröffnung
- 149: Ausziehrichtung

## Patentansprüche

1. Mitnehmerrolle für eine Ausziehführung für ausziehbare Möbelteile, insbesondere für einen Synchronantrieb einer Mittelschiene (102) der Ausziehführung, **dadurch gekennzeichnet, dass** die Mitnehmerrolle erste und zweite Nabenteile (1, 2) umfasst, die in Richtung der Achse (4) der Mitnehmerrolle gegeneinander verschiebbar sind und durch einen Mantel (3) verbunden sind, der in einem parallel zur Achse (4) der Mitnehmerrolle verlaufenden Querschnitt gesehen zumindest abschnittsweise gekrümmt zwischen dem ersten und zweiten Nabenteil (1, 2) verläuft und die Lauffläche (5) der Mitnehmerrolle bildet.

2. Mitnehmerrolle nach Anspruch 1, **dadurch gekennzeichnet, dass** der Mantel (3) mit in Umfangsrichtung der Lauffläche (5) voneinander beabstandeten, quer zur Umfangsrichtung der Lauffläche (5) verlaufenden Schlitzen (7) versehen ist, die sich zumindest über den Bereich der Lauffläche (5) erstrecken.

3. Mitnehmerrolle nach Anspruch 1 oder 2, **dadurch gekennzeichnet, dass** der Mantel (3) in einem parallel zur Achse (4) der Mitnehmerrolle verlaufenden Querschnitt gesehen U-förmig ausgebildet ist.

4. Mitnehmerrolle nach einem der Ansprüche 1 bis 3, **dadurch gekennzeichnet, dass** der Mantel (3) ohne einwirkende äußere Kraft in einem parallel zur Achse (4) der Mitnehmerrolle verlaufenden Querschnitt gesehen im Bereich der Lauffläche (5) bogenförmig gekrümmt ist.

5. Mitnehmerrolle nach einem der Ansprüche 1 bis 4, **dadurch gekennzeichnet, dass** eines der Nabenteile (1, 2) an der Achse (4) befestigt ist oder einstückig mit dieser ausgebildet ist und das andere der Nabenteile (1, 2) auf der Achse (4) in deren Längsrichtung verschiebbar ist.

6. Mitnehmerrolle nach einem der Ansprüche 1 bis 5, **dadurch gekennzeichnet, dass** der Mantel (3) mit seinen Rändern einerseits am ersten, andererseits am zweiten Nabenteil (1, 2) festgelegt ist.

7. Mitnehmerrolle nach einem der Ansprüche 1 bis 6, **dadurch gekennzeichnet, dass** der Mantel (3) aus einem gummielastischen Material besteht, vorzugsweise aus einem thermoplastischen Elastomer.

8. Ausziehführung mit einer Korpusschiene (101), die an einem Möbelkorpus (104) befestigbar ist, einer an einem ausziehbaren Möbelteil (105) befestigbaren Ausziehschiene (103) und einer zwischen der Korpusschiene (101) und der Ausziehschiene (103) angeordneten Mittelschiene (102), wobei die Mittelschiene (102) für einen Synchronantrieb der Mittelschiene (102) beim Ausziehen und Einschieben der Ausziehschiene (103) zumindest über einen Teil des Weges der Ausziehschiene (103) mindestens eine um eine Achse (4) drehbar gelagerte Mitnehmerrolle (8) nach einem der Ansprüche 1 bis 7 aufweist.

9. Ausziehführung nach Anspruch 8, **dadurch gekennzeichnet, dass** die Achse (4) der Mitnehmerrolle (8) in einem Winkelbereich von 45° um die Vertikale, vorzugsweise vertikal, angeordnet ist.

10. Ausziehführung nach Anspruch 9, **dadurch gekennzeichnet, dass** die Mitnehmerrolle (8) einerseits an einer Laufbahn (135) der Ausziehschiene (103) abrollt, welche einer Anlageebene (123) zugewandt ist, an der eine Anlagefläche (121) der Korpusschiene (101) an der Seitenwand (122) des Möbelkorpus (104) anlegbar ist, andererseits an der Seitenwand (122) des Möbelkorpus (104) abrollbar ist.

11. Ausziehführung nach einem der Ansprüche 8 bis 10, **dadurch gekennzeichnet, dass** die Mitnehmerrolle (8) an der Unterseite der Mittelschiene (102) angeordnet ist.

12. Ausziehführung nach einem der Ansprüche 8 bis 11, **dadurch gekennzeichnet, dass** die Schienen (101, 102, 103) über drehbar an den Schienen (101, 102, 103) gelagerte Laufrollen (106 -109) gegeneinander verschiebbar geführt sind, vorzugsweise an jeder der Schienen (101, 102, 103) mindestens eine Laufrolle (106-109) um eine zur jeweiligen Schiene (101, 102, 103) ortsfeste Achse drehbar gelagert ist.

13. Möbel mit einer am Möbelkorpus (104) montierten Ausziehführung nach einem der Ansprüche 8 bis 12.
